# EUROPEAN PATENT SPECIFICATION

(11) **EP 3 424 886 B1**
(45) Date of publication and mention of the grant of the patent: **18.01.2023**
(21) Application number: 17735369.5
(22) Date of filing: 25.05.2017
(51) Int. Cl.: C02F 9/02, C02F 1/44, B01D 61/08, B01D 63/06, B01D 61/04, B01D 61/10, B01D 63/10, C02F 1/00, C02F 9/00

(54) **COMPOSITE FILTER ELEMENT, COMPOSITE FILTER ELEMENT ASSEMBLY, AND WATER PURIFICATION SYSTEM**
KOMPOSITFILTERPATRONE, KOMPOSITFILTERPATRONENANORDNUNG UND WASSERREINIGUNGSSYSTEM
ÉLÉMENT FILTRANT COMPOSITE, ENSEMBLE ÉLÉMENT FILTRANT COMPOSITE ET SYSTÈME DE PURIFICATION D'EAU

(30) Priority: 07.03.2017 CN 201720219850 U; 07.03.2017 CN 201710132572
(43) Date of publication of application: 09.01.2019
(73) Proprietor: Foshan Shunde Midea Water Dispenser MFG. Co., Ltd., Foshan, Guangdong 528311 (CN); Midea Group Co., Ltd., Foshan, Guangdong 528311 (CN)
(72) Inventor: ZHANG, Xingzhi, Foshan Guangdong 528311 (CN); HE, Zhifeng, Foshan Guangdong 528311 (CN)
(74) Representative: Lam, Alvin
(86) International application number: PCT/CN2017/086002
(87) International publication number: WO 2018/161439

(56) References cited:
- EP-A1- 1 446 218
- CN-A- 105 236 640
- CN-U- 201 648 130
- CN-U- 204 298 159
- CN-U- 205 346 995
- CN-U- 205 367 921
- CN-U- 205 773 526
- CN-U- 205 868 019
- GB-A- 1 202 215
- US-A- 4 992 170
- US-A1- 2004 206 682
- US-A1- 2006 049 096

## Description

### FIELD

The present disclosure relates to a technical field of water treatment, and particularly to a composite filter cartridge, a composite filter cartridge assembly and a water purification system.

### BACKGROUND

In the related art, commonly used composite filter cartridges at present include carbon rod + ultrafiltration filter cartridge, PP + activated carbon composite filter cartridge, granular activated carbon + ultrafiltration filter cartridge, etc. However, composite filter cartridge with regard to nanofiltration membrane or reverse osmosis membrane is rarely existed due to reasons in terms of sealing, pressure-endurance, and performance. Only several composite filter cartridges with regard to reverse osmosis membrane are existed, in which a post activated carbon filter cartridge for improving taste is still placed outside an integral filter cartridge, which is not conducive to a miniaturization of a size of a complete machine.

CN205346995U relates to composite filter element including preprocessing filter element assembly, fine filtering element kit and the activated-carbon filter core assembly being sequentially arranged along water (flow) direction, and described preprocessing filter element assembly, described fine filtering element kit are connected with described activated carbon filter core assembly.

### SUMMARY

The present disclosure seeks to solve at least one of the problems existing in the related art. Therefore, in accordance with the present invention, there is provided a composite filter cartridge, as set out in claim 1, which has a simple and compact structure, a small diameter and a good pressure-endurance performance.

In accordance with the present invention, there is provided a composite filter cartridge assembly as set out in claim 7.

In accordance with the present invention, there is provided a water purification system as set out in claim 8.

With the composite filter cartridge according to embodiments of the present disclosure, by disposing the pretreatment filter cartridge and the fine filter cartridge successively from outside to inside, and positioning the taste filter cartridge downstream of the fine filter cartridge at the axial end of the fine filter cartridge, the whole composite filter cartridge is designed to have a stereo arrangement, so that a diameter of the composite filter cartridge can be reduced, which is beneficial for pressure endurance of the filtering housing where the composite filter cartridge is housed. Meanwhile, the structure is simple, the volume is small, the miniaturization of the complete machine is benefited and the quality of the outflow water is good.

According to some alternative embodiments of the present disclosure, the filtration assembly and the taste filter cartridge are arranged in an up-and-down direction. Thus, it is possible to realize a stereo arrangement of the composite filter cartridge in the up and down direction, and to reduce a diameter of the composite filter cartridge, which is beneficial for reducing a size of the complete machine.

Further, the taste filter cartridge is located above the filtration assembly. Thus, the whole composite filter cartridge has a reasonable and stable structure.

The composite filter cartridge further includes: a connecting casing disposed in the second end cap and connected to the central water collecting pipe, in which the concentrated water channel is defined between the connecting casing and the second end cap, the taste filter cartridge is disposed in the connecting casing, and the circulation channel is defined between the taste filter cartridge and an inner wall of the connecting casing. Thus, by providing the connecting casing, the assembly of the taste filter cartridge is facilitated, and the taste filter cartridge can be conveniently isolated from the filtration assembly

Further, a protruding block is disposed between the inner wall of the connecting casing and the taste filter cartridge to make the inner wall of the connecting casing spaced apart from the taste filter cartridge, and a gap between the inner wall of the connecting casing and the taste filter cartridge constitutes the circulation channel. Thus, by providing the protruding block, the forming of the circulation channel is facilitated.

Alternatively, an annular protrusion is formed on the connecting casing, and a water outlet end of the central water collecting pipe is fitted in the annular protrusion. Thus, the connection between the taste filter cartridge and the fine filter cartridge is facilitated, which is rapid and reliable.

According to further embodiments of the present disclosure, the composite filter cartridge further includes: a first positioning member and a second positioning member, in which the first positioning member and the second positioning member are disposed to two axial ends of the taste filter cartridge and are connected to the taste filter cartridge separately. Thus, by providing the first positioning member and the second positioning member, the taste filter cartridge can be conveniently located in the connecting casing.

Further, the taste filter cartridge is configured to be a tubular shape, an inner hole of the taste filter cartridge constitutes the pure water channel, the first positioning member includes a first positioning body and a first position limiting protrusion formed on the first positioning body, the first positioning body covers a first end of the taste filter cartridge adjacent to the central water collecting pipe, the first position limiting protrusion is fitted in the inner hole of the taste filter cartridge, the second positioning member includes a second positioning body and a second position limiting protrusion formed on the second positioning body, the second positioning body is disposed to a second end of the taste filter cartridge away from the central water collecting pipe, the second position limiting protrusion is fitted in the inner hole of the taste filter cartridge and is provided with a water drain hole penetrating through the second positioning member in an axial direction.

Thus, by configuring the taste filter cartridge as a tubular shape, the forming of the pure water channel of the taste filter cartridge is facilitated. Furthermore, with the first position limiting protrusion on the first positioning member and the second position limiting protrusion on the second positioning member being fitted with the inner hole of the taste filter cartridge respectively, the taste filter cartridge can be conveniently and rapidly mounted and positioned, and further the structure of a flow path in the composite filter cartridge can be simple.

The composite filter cartridge assembly according to embodiments of a second aspect of the present disclosure includes: a filtering housing provided with a raw water inlet, a pure water outlet and a concentrated water outlet; and a composite filter cartridge according to the above embodiments of the first aspect of the present disclosure, the composite filter cartridge is disposed in the filtering housing, the raw water inlet is in communication with a water intake end of the pretreatment filter cartridge, the pure water outlet is in communication with a pure water channel, and the concentrated water outlet is in communication with a concentrated water channel.

With the composite filter cartridge assembly according to embodiments of the present disclosure, by providing the above composite filter cartridge, the diameter of the composite filter cartridge is reduced, such that the pressure-endurance of the filtering housing is facilitated, the reliability of the composite filter cartridge assembly is improved, and further the miniaturization of the complete machine is facilitated while the quality of the outflow water is good.

The water purification system according to embodiments of a third aspect of the present disclosure includes: a composite filter cartridge assembly according to the above embodiments of the second aspect of the present disclosure.

With the water purification system according to embodiments of the present disclosure, by providing the above composite filter cartridge assembly, the miniaturization of the complete machine is facilitated, and the quality of the outflow water is good.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a schematic view of a water purification system according to embodiments of the present disclosure;
Fig. 2 is a schematic view of a composite filter cartridge assembly according to embodiments of the present disclosure;
Fig. 3 is a schematic view of a composite filter cartridge according to embodiments of the present disclosure;
Fig. 4 is an enlarged view of portion A shown in Fig. 3.

Reference numerals:
water purification system 100;
composite filter cartridge assembly 1;
filtering housing 11; raw water inlet 111; pure water outlet 112; concentrated water outlet 113;
composite filter cartridge 12; pretreatment filter cartridge 121; fine filter cartridge 122; central water collecting pipe 1221; fine filtration membrane 1222; taste filter cartridge 123;
first end cap 124; first flanging portion 1241; second flanging portion 1242; first accommodating chamber 1243; mounting boss 1244;
second end cap 125; third flanging portion 1251; fourth flanging portion 1252; second accommodating chamber 1253;
connecting casing 126; protruding block 1261; annular protrusion 1262; through hole 1263; seal element 1264;
first positioning member 127; first positioning body 1271; fifth flanging portion 1272; first position limiting protrusion 1273;
second positioning member 128; second positioning body 1281; sixth flanging portion 1282; second position limiting protrusion 1283; water drain hole 1284;
pre-filtration mesh 2; water intake solenoid valve 3; booster pump 4; check valve 5; high pressure switch 6; waste water solenoid valve 7;
concentrated water channel a1; circulation channel a2; pure water channel a3;
water inlet pipeline b1; pure water pipeline b2; concentrated water pipeline b3.

### DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure.

In the specification, it is to be understood that terms such as "central," "upper," "lower," "vertical," "horizontal," "top," "bottom," "inner," "outer," "axial," "radial," and "circumferential" should be construed to refer to the orientation as then described or as shown in the drawings under discussion. These relative terms are for convenience of description and do not require that the present disclosure be constructed or operated in a particular orientation. In addition, the feature defined with "first" and "second" may comprise one or more of this feature. In the description of the present disclosure, "a plurality of' means two or more than two, unless specified otherwise.

In the present disclosure, unless specified or limited otherwise, the terms "mounted," "connected," "coupled," and the like are used broadly, and may be, for example, fixed connections, detachable connections, or integral connections; may also be mechanical or electrical connections; may also be direct connections or indirect connections via intervening structures; may also be inner communications of two elements. The above terms can be understood by those skilled in the art according to specific situations.

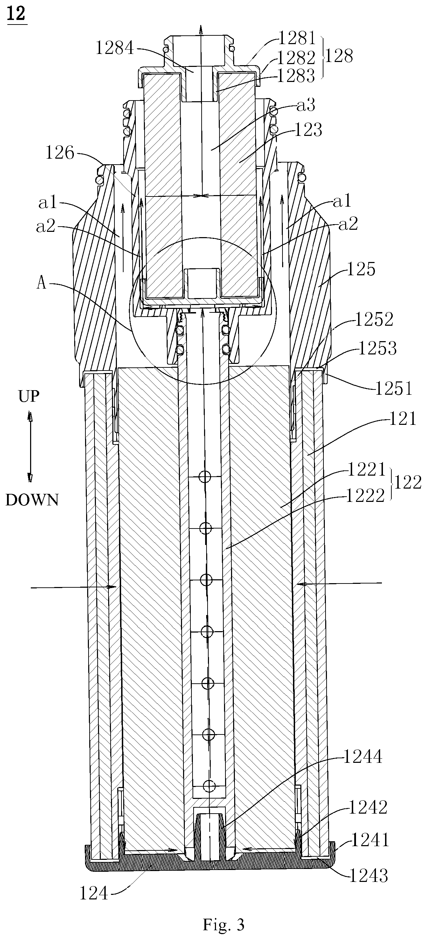

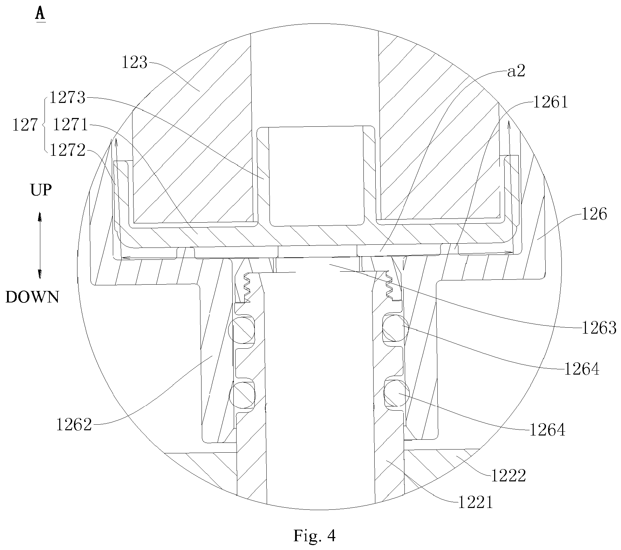

A composite filter cartridge 12 according to embodiments of a first aspect of the present disclosure will be described below with reference to Figs. 3 and 4.

As illustrated in Figs. 3 and 4, the composite filter cartridge 12 according to embodiments of the present disclosure includes: a filtration assembly, a first end cap 124, a second end cap 125 and a taste filter cartridge 123.

Specifically, the filtration assembly includes a pretreatment filter cartridge 121 and a fine filter cartridge 122 disposed successively from outside to inside. The fine filter cartridge 122 includes a central water collecting pipe 1221 and a fine filtration membrane 1222 wound around the central water collecting pipe 1221. In which, the pretreatment filter cartridge 121 may be a PAC (PP and C, a composite filter cartridge of PP cotton and activated carbon), for example, the pretreatment filter cartridge 121 may include a PP nonwoven winding layer (accuracy of the PP nonwoven winding layer may be set to 5µm) and an activated carbon fiber winding layer distributed successively from outside to inside in a radial direction of the composite filter cartridge 12. The pretreatment filter cartridge 121 may remove rust, silt, and absorb the abnormal color, odor, residual chlorine and a part of organic matter effectively, thereby ensuring a quality of the water entering the fine filter cartridge 122 and prolonging the service life of the fine filter cartridge 122. The fine filtration membrane 1222 of the fine filter cartridge 122 may be a reverse osmosis membrane or a nanofiltration membrane, the fine filter cartridge 122 may capture bacteria, viruses, heavy metal, etc. The fine filter cartridge 122 may be made by using multi-membrane rolling process, thus a performance of the fine filter cartridge 122 can be improved.

The first end cover 124 is disposed to a first end (for example, referring to Fig. 3, the first end cover 124 is disposed to a lower end of the filtering assembly) of the filtering assembly in an axial direction and connected with the filtering assembly so as to cover the first end of the filtering assembly in the axial direction. For example, in the example shown in Fig. 3, the first end cover 124 may be formed to be a disc shape, and a first flanging portion 1241 extending upwards and a second flanging portion 1242 located inside the first flanging portion 1241 and spaced apart from the first flanging portion 1241 in the radial direction of the first end cover 124 are formed in a circumferential edge of the first end cover 124. A first accommodating cavity 1243 in an annular shape is formed between the first flanging portion 1241 and the second flanging portion 1242, a lower end of the pretreatment filter cartridge 121 is accommodated in the first accommodating cavity 1243 and fitted tightly with an inside wall of the first flanging portion 1241 and an outside wall of the second flanging portion 1242. A mounting boss 1244 extending towards the fine filter cartridge 122 is formed on the first end cover 124, and the mounting boss 1244 is fitted in the central water collecting pipe 1221 of the fine filter cartridge 122 so that the first end cover 124 can be connected with the filtering assembly stably and reliably.

The second end cover 125 is formed to be a cylindrical shape and disposed to a second end (for example, referring to Fig. 3, the second end cover 125 is disposed to an upper end of the filtering assembly) of the filtering assembly in the axial direction and connected with the pretreatment filter cartridge 121. For example, in the example shown in Fig. 3, a third flanging portion 1251 and a fourth flanging portion 1252 extending downwards are formed at an outer circumferential edge and an inner circumferential edge of a lower end of the second end cover 125 respectively. A second accommodating cavity 1253 in an annular shape is formed between the third flanging portion 1251 and the fourth flanging portion 1252, an upper end of the pretreatment filter cartridge 121 is accommodated in the foregoing second accommodating cavity 1253 and fitted tightly with an inside wall of the third flanging portion 1251 and an outside wall of the fourth flanging portion 1252, so that the second end cover 125 can be connected with the pretreatment filter cartridge 121 stably and reliably.

The taste filter cartridge 123 is disposed in the second end cover 125, the taste filter cartridge 123 is connected with the central water collecting pipe 1221 and located downstream of the fine filter cartridge 122. The taste filter cartridge 123 may be an activated carbon layer, for example, the taste filter cartridge 123 may be an activated carbon rod. The taste filter cartridge 123 can remove volatile organic compounds and the residual chlorine, and keep the necessary minerals for example trace calcium, silicic acid, carbonate and the like to make the taste sweet and soft. A concentrated water channel a1 and a circulation channel a2 arranged sequentially from outside to inside and spaced apart from each other are defined between the taste filter cartridge 123 and the second end cover 125. The circulation channel a2 is communicated with the central water collecting pipe 1221. The taste filter cartridge 123 is provided with a pure water channel a3 configured for a pure water outflow.

A work process of the composite filter cartridge 12 will be briefly illustrated below with reference to the Fig. 3.

Referring to Fig. 3 (arrows in the figure indicate flow directions of the water), raw water is first preliminarily filtered by the pretreatment filter cartridge 121, and then finely filtered by the fine filter cartridge 122, the water filtered by the fine filter cartridge 122 is divided into two parts. One part is the pure water, which is collected by the central water collecting pipe 1221 of the fine filter cartridge 122. The pure water in the central water collecting pipe 1221 flows into the taste filter cartridge 123 through the foregoing circulation channel a2 for a taste improvement, and the pure water filtered by the taste filter cartridge 123 flows out through the pure water channel a3 in the taste filter cartridge. The other part is the concentrated water, which is discharged out of the composite filter cartridge 12 through the concentrated water channel.

With taste filter cartridge 123 being disposed to an axial end of the fine filter cartridge 122, the whole composite filter cartridge 12 is configured to have a stereo arrangement, so that a diameter of the composite filter cartridge 12 can be reduced , which is beneficial for a pressure-endurance of a filtering housing 11 where the composite filter cartridge 12 is placed. A structure is simple and a volume is small to facilitate a miniaturization of the complete machine. In addition, not only a taste adjustment can be achieved, but also a reverse osmosis filtration of the water can be implemented so as to obtain a good quality of an outflow water.

Furthermore, the taste filter cartridge 123, the pretreatment filter cartridge 121 and the fine filter cartridge 122 are composed into an integrated filter cartridge, which reduces the number of pipe fittings, thereby reducing a risk of water leakage. When the filter cartridge is to be replaced, it is just needed to replace one filter cartridge integrally in one time, which reduces a replacement frequency for the user and is convenient for the user to use.

With the composite filter cartridge 12 according to embodiments of the present disclosure, by disposing the pretreatment filter cartridge 121 and the fine filter cartridge 122 successively from outside to inside, and positioning the taste filter cartridge 123 located downstream of the fine filter cartridge 122 at the axial end of the fine filter cartridge 122, the whole composite filter cartridge 12 is configured to have a stereo arrangement, so that the diameter of the composite filter cartridge 12 can be reduced, which is beneficial for pressure-endurance of the filtering housing 11 where the composite filter cartridge 12 is placed. Meanwhile, the structure is simple and the volume is small to facilitate the miniaturization of the complete machine, and in addition, the quality of the outflow water is good.

According to some alternative embodiments of the present disclosure, referring to Fig. 3, the filtration assembly and the taste filter cartridge 123 are arranged in an up-and-down direction. Thus, it is possible to realize a stereo arrangement of the composite filter cartridge 12 in the up and down direction, and to reduce a diameter of the composite filter cartridge 12, which is beneficial for reducing a size of the complete machine..

Further, referring to Fig. 3, the taste filter cartridge 123 is located above the filtration assembly. Thus, by disposing the taste filter cartridge 123 above the filtration assembly, the whole composite filter cartridge 12 has a reasonable and stable structure, and meanwhile a design of a flow path in an interior of the composite filter cartridge 12 is facilitated.

Referring to Figs. 3 and 4, the composite filter cartridge 12 further includes: a connecting casing 126 disposed in the second end cap 125 and connected to the central water collecting pipe 1221. The concentrated water channel a1 is defined between the connecting casing 126 and the second end cap 125, the taste filter cartridge 123 is disposed in the connecting casing 126, and the circulation channel a2 is defined between the taste filter cartridge 123 and an inner wall of the connecting casing 126. Thus, by providing the connecting casing 126, the assembly of the taste filter cartridge 123 is facilitated, and the taste filter cartridge 123 can be conveniently separated from the filtration assembly.

Further, referring to Fig. 4, a protruding block 1261 is provided between the inner wall of the connecting casing 126 and the taste filter cartridge 123 so that the inner wall of the connecting casing 126 and the taste filter cartridge 123 are spaced apart, and a gap between the inner wall of the connecting casing 126 and the taste filter cartridge 123 constitutes the circulation channel a2. Thus, with the protruding block 1261 arranged, the inner wall of the connecting casing 126 and the taste filter cartridge 123 are spaced apart, so that the circulation channel a2 can be formed between the taste filter cartridge 123 and the inner wall of the connecting casing 126, and thus the water out of the central water collecting pipe 1221 of the fine filter cartridge 122 can flow into the taste filter cartridge 123 smoothly for filtration. Alternatively, the protruding block 1261 above may be formed on the inner wall of the connecting casing 126, one protruding block 1261 may be provided and formed to be an annular shape. The protruding block 1261 may also be a rod shape and a plurality of protruding blocks 1261 spaced apart may be provided.

Alternatively, referring to Fig. 3 and Fig. 4, an annular protrusion 1262 may be formed on the connecting casing 126, and a water outlet end (an upper end of the central water collecting pipe 1221 in Fig. 3 and Fig. 4) of the central water collecting pipe 1221 is fitted in the annular protrusion 1262. Thus, with the central water collecting pipe 1221 being fitted in the annular protrusion 1262 of the connecting casing 126, it facilitates a connection between the taste filter cartridge 123 and the fine filter cartridge 122, and the connection is rapid and reliable, and in addition, the pure water in the central water collecting pipe 1221 can flow into the connecting casing 126 smoothly.

Further, a seal element 1264 (for example a sealing ring) may be disposed between an inner circumferential wall of the annular protrusion 1262 and an outer circumferential wall of the central water collecting pipe 1221, so that it is possible to guarantee a sealing between the connecting casing 126 and the central water collecting pipe 1221 and prevent the concentrated water in the concentrated water channel a1 from entering the connecting casing 126.

According to further embodiments of the present disclosure, referring to Figs. 3 and 4, the composite filter cartridge 12 further includes a first positioning member 127 and a second positioning member 128. The first positioning member 127 and the second positioning member 128 are disposed to two axial ends of the taste filter cartridge 123 separately and are connected to the taste filter cartridge 123. Thus, by providing the first positioning member 127 and the second positioning member 128, the position of the taste filter cartridge 123 can be limited in an axial direction (referring to the up-and-down direction in Fig. 3), such that the taste filter cartridge 123 can be conveniently positioned in the connecting casing 126, and the composite filter cartridge 12 can obtain a stable and reliable structure.

Further, referring to Fig. 3 and Fig. 4, the taste filter cartridge 123 is formed to be a tubular shape, and both two axial ends of the taste filter cartridge 123 can be open, which makes the taste filter cartridge 123 a simple structure and easy to process and shape. The inner hole of the taste filter cartridge 123 constitutes the pure water channel a3 so that it is not required to arrange the pure water channel a3 in the taste filter cartridge 123 additionally. The first positioning member 127 includes the first positioning body 1271 and the first position limiting protrusion 1273 formed on the first positioning body 1271. The first positioning body 1271 covers a first end (referring to a lower end of the taste filter cartridge 123 in Fig. 3) of the taste filter cartridge 123 adjacent to the central water collecting pipe 1221, so that the pure water channel a3 in the taste filter cartridge 123 is spaced apart from the central water collecting pipe 1221, and the water in the central water collecting pipe 1221 is prevented from entering the pure water channel a3 directly without being filtered by the taste filter cartridge 123. The first position limiting protrusion 1273 is fitted in the inner hole of the taste filter cartridge 123.

The second positioning member 128 includes the second positioning body 1281 and the second position limiting protrusion 1283 formed on the second positioning body 1281, the second positioning body 1281 is disposed to the second end (referring to an upper end of the taste filter cartridge 123 in Fig. 3) of the taste filter cartridge 123 away from the central water collecting pipe 1221, and the second position limiting protrusion 1283 is fitted in the inner hole of the taste filter cartridge 123 and provided with a water drain hole 1284 penetrating the second positioning member 128 along the axial direction. Thus, the pure water in the pure water channel a3 can flow out through the water drain hole 1284 in the second positioning member 128 for drinking.

Thus, by configuring the taste filter cartridge 123 as the tubular shape, it facilitates the formation of the pure water channel a3 in the taste filter cartridge 123. In addition, with the first position limiting protrusion 1273 on the first positioning member 127 and the second position limiting protrusion 1283 on the second positioning member 128 being fitted with the inner hole of the taste filter cartridge 123 respectively, it is possible to make an assembly and positioning of the taste filter cartridge 123 more convenient and rapid and make the structure of the flow path in the composite filter cartridge 12 simple.

The composite filter cartridge 12 according to a specific embodiment of the present disclosure will be described below with reference to Figs. 3 and 4.

Referring to Figs. 3 and 4, in the present embodiment, the composite filter cartridge 12 includes the above filtration assembly, the first end cap 124, the second end cap 125, the taste filter cartridge 123, the connecting casing 126, the first positioning member 127 and the second positioning member 128. The filtration assembly includes the above pretreatment filter cartridge 121 and the fine filter cartridge 122, the first end cap 124 is disposed to a bottom of the filtration assembly and is connected to both of the pretreatment filter cartridge 121 and the fine filter cartridge 122, and the second end cap 125 is disposed to a top of the filtration assembly and is connected to the pretreatment filter cartridge 121. The connecting casing 126 is disposed in the second end cap 125, an upper end of the connecting casing 126 is open and a lower end of the connecting casing 126 is provided with a through hole 1263 in communication with an inner chamber of the connecting casing 126. The annular protrusion 1262 extending downwards is formed on a circumferential edge of the through hole 1263, and the upper end of the central water collecting pipe 1221 is fitted in the annular protrusion 1262.

The taste filter cartridge 123 is disposed in the connecting casing 126. The first positioning member 127 and the second positioning member 128 are formed at the lower end and the upper end of the taste filter cartridge 123 respectively. The protruding block 1261 mentioned above is formed on a bottom wall of the connecting casing 126, and the first positioning member 127 is located in the connecting casing 126 and the first positioning body 1271 of the first positioning member 127 is supported on the protruding block 1261 so that the first positioning body 1271 and the bottom wall of the connecting casing 126 can be spaced apart, thus the pure water in the central water collecting pipe 1221 can flow into the circulation channel a2 of the connecting casing 126 smoothly.

The first positioning body 1271 is formed to be a circular shape, a fifth flanging portion 1272 extending upwards is formed on the circumferential edge of the first positioning body 1271, a lower end of the taste filter cartridge 123 abuts against an inner circumferential wall of the fifth flanging portion 1272, so that a fitting stability of the first positioning member 127 and the taste filter cartridge 123 can be further improved. The fifth flanging portion 1272 is spaced apart from the inner circumferential wall of the connecting casing 126, then the gap between the first positioning member 127 and the inner wall of the connecting casing 126 and the gap between the outer circumferential wall of the taste filter cartridge 123 and the inner wall of the connecting casing 126 constitute the circulation channel a2 mentioned above together. The second positioning body 1281 is formed to be a circular shape, a sixth flanging portion 1282 extending downwards is formed on a circumferential edge of the second positioning body 1281. An upper end of the taste filter cartridge 123 abuts against an inner circumferential wall of the sixth flanging portion 1282, so that a fitting stability of the second positioning member 128 and the taste filter cartridge 123 can be further improved.

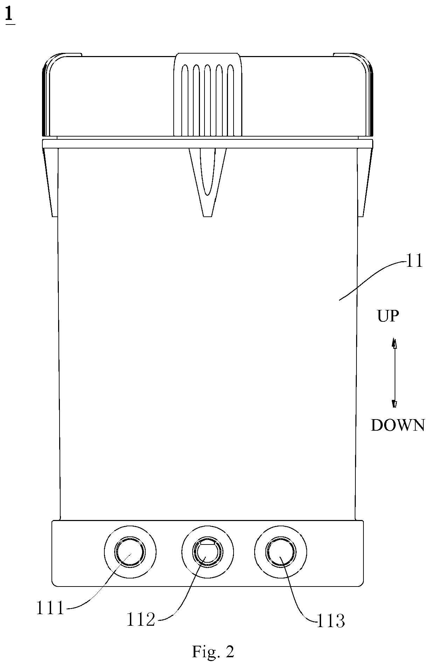

A composite filter cartridge assembly 1 according to embodiments of a second aspect of the present disclosure will be described below with reference to Figs. 2 to 4.

As illustrated in Figs. 2 and 4, the composite filter cartridge assembly 1 according to embodiments of the second aspect of the present disclosure includes: the filtering housing 11 and the composite filter cartridge 12 according to the above embodiments of the first aspect of the present disclosure. The filtering housing 11 is provided with a raw water inlet 111, a pure water outlet 112 and a concentrated water outlet 113. The raw water inlet 111, the pure water outlet 112 and the concentrated water outlet 113 may be formed in a lower end of the filtering housing 11, the composite filter cartridge 12 is disposed in the filtering housing 11. The raw water inlet 111 is in communication with a water intake end of a pretreatment filter cartridge 121, the pure water outlet 112 is in communication with the pure water channel a3, and the concentrated water outlet 113 is in communication with the concentrated water channel a1. Thus, the raw water can enter the filtering housing 11 through the raw water inlet 111 of the filtering housing 11, and flow into the pretreatment filter cartridge 121 through the water intake end of the pretreatment filter cartridge 121 to be filtered preliminarily. After being preliminarily filtered by the pretreatment filter cartridge 121, the water is filtered by the fine filter cartridge 122 and the taste filter cartridge 123 successively, and then the pure water entering the pure water channel a3 can flow out through the pure water outlet 112 of the filtering housing 11 for drinking, and the concentrated water entering the concentrated water channel a1 can be discharged out of the filtering housing 11 through the concentrated water outlet 113 of the filtering housing 11.

It should be understood that, since the diameter of the composite filter cartridge 12 is reduced, the pressure-endurance requirement for the filtering housing 11 can be low, which is benefit for the pressure-endurance of the filtering housing 11, reduces a cost and reliability of the composite filter cartridge assembly 1, and further facilitates a miniaturization of the complete machine and guarantees the good quality of the outflow water.

With the composite filter cartridge assembly 1 according to embodiments of the present disclosure, by providing the above composite filter cartridge 12, the diameter of the composite filter cartridge 12 is reduced, such that the pressure-endurance of the filtering housing 11 is facilitated, the reliability of the composite filter cartridge assembly 1 is improved, and further the miniaturization of the complete machine is facilitated and the quality of the outflow water is good.

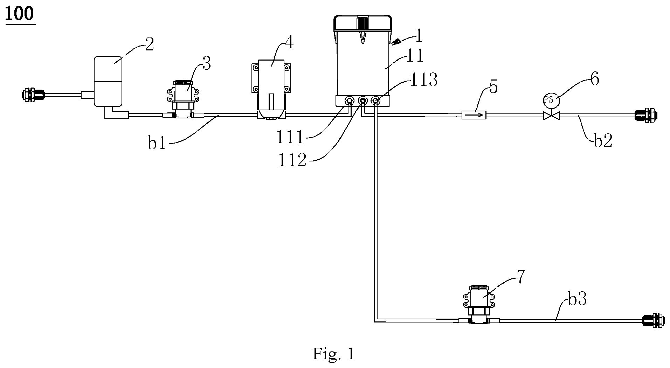

A water purification system 100 according to embodiments of a third aspect of the present disclosure will be described below with reference to Figs. 1 to 4.

As illustrated in Figs. 1 to 4, the water purification system 100 according to embodiments of the third aspect of the present disclosure includes the composite filter cartridge assembly 1 according to the above embodiments of the second aspect of the present disclosure.

With the water purification system 100 according to embodiments of the present disclosure, by providing the above composite filter cartridge assembly 1, the miniaturization of the complete machine is facilitated, and the quality of the outflow water is good.

In an embodiment of the present disclosure, referring to Fig. 1, the water purification system 100 includes: a water inlet pipeline b1, a pure water pipeline b2, a concentrated water pipeline b3, a pre-filtration mesh 2, a water intake solenoid valve 3, a booster pump 4, the composite filter cartridge assembly 1, a check valve 5, a high pressure switch 6, a water faucet and a waste water solenoid valve 7. The water inlet pipeline b1 is connected to the raw water inlet of the filtering housing 11, in a direction of a water flow, the pre-filtration mesh 2, the water intake solenoid valve 3 and the booster pump 4 are successively connected in the water inlet pipeline b1 in series. The pre-filtration mesh 2 is configured to filter the rust, the silt and the like in a larger size in the raw water, the water intake solenoid valve 3 is configured to control the communication and cutoff of the water inlet pipeline b1, and the booster pump 4 is configured to increase the water inlet pressure.

The pure water pipeline b2 is connected to the pure water outlet 112 of the filtering housing 11, in the direction of the water flow, the check valve 5, the high pressure switch 6 and the water faucet are successively connected in the pure water pipeline b2 in series, the check valve 5 is unidirectionally open in a direction from the pure water outlet 112 to the water faucet. The check valve 5 is configured to prevent the water in the pure water pipeline b2 from flowing back into the composite filter cartridge 12, and the high pressure switch 6 can detect that whether the water faucet is in an open state or in a closed state according to a water pressure in the pure water pipeline b2. The waste water solenoid valve 7 is connected in the concentrated water pipeline b3 in series, and the waste water solenoid valve 7 is configured to adjust a proportion of the waste water to balance a working pressure of the water purification system 100.

Thus, when the water faucet is opened, the water purification system 100 starts to operate, the water intake solenoid valve 3 is opened, the high pressure switch 6 is closed, the raw water enters the raw water pipeline and flows through the pre-filtration mesh 2, the water intake solenoid valve 3 and the booster pump 4 successively, and then flows into the composite filter cartridge 12 through the raw water inlet 111 of the filtering housing 11 to carry out the purification process. A part of the water after being processed by the composite filter cartridge 12 is the pure water, which flows into the pure water pipeline b2 through the pure water outlet 112 of the filtering housing 11, and finally flows out through the water faucet for drinking; the other part thereof is the concentrated water, which flows into the concentrated water pipeline b3 through the concentrated water outlet 113 of the filtering housing 11 to be discharged.

Reference throughout this specification to "an embodiment," "some embodiments," "an illustrative embodiment," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples.

Although embodiments of the present disclosure have been shown and illustrated, it shall be understood by those skilled in the art that various changes, modifications, alternatives and variants without departing from the principle of the present disclosure are acceptable. The scope of the present disclosure is defined by the claims or the like.

## Claims

1. A composite filter cartridge (12), comprising:
a filtration assembly comprising a pretreatment filter cartridge (121) and a fine filter cartridge (122) disposed successively from outside to inside, the fine filter cartridge (122) comprising a central water collecting pipe (1221) and a fine filtration membrane (1222) wound around the central water collecting pipe (1221);
a first end cap (124) disposed to an axial end of the filtration assembly and connected to the filtration assembly to cover the axial end of the filtration assembly;
a second end cap (125) having a cylindrical shape, disposed to the other axial end of the filtration assembly and connected to the pretreatment filter cartridge (121);
a taste filter cartridge (123) comprising an activated carbon layer disposed in the second end cap (125), the taste filter cartridge (123) being connected to the central water collecting pipe (1221) and being located downstream of the fine filter cartridge (122), a concentrated water channel (a1) and a circulation channel (a2) disposed successively from outside to inside and separated from each other being defined between the taste filter cartridge (123) and the second end cap (125), the circulation channel (a2) being in communication with the central water collecting pipe (1221) and upstream of the taste filter cartridge (123), and the taste filter cartridge (123) being provided with a pure water channel (a3) configured for the pure water outflow,
a connecting casing (126) disposed in the second end cap (125) and connected to the central water collecting pipe (1221), wherein the concentrated water channel (a1) is defined between the connecting casing (126) and the second end cap (125), the taste filter cartridge (123) is disposed in the connecting casing (126), and the circulation channel (a2) is defined between the taste filter cartridge (123) and an inner wall of the connecting casing (126), wherein a part of the circulation channel (a2) runs adjacent to the taste filter cartridge (123); and
a protruding block (1261) disposed between the inner wall of the connecting casing (126) and the taste filter cartridge (123) to make the inner wall of the connecting casing (126) spaced apart from the taste filter cartridge (123), wherein a gap between the inner wall of the connecting casing (126) and the taste filter cartridge (123) constitutes the circulation channel (a2).

2. The composite filter cartridge (12) according to claim 1, wherein the filtration assembly and the taste filter cartridge (123) are arranged along an axial direction of the composite filter cartridge (12).

3. The composite filter cartridge (12) according to claim 2, wherein in an installation configuration, the taste filter cartridge (123) is located above the filtration assembly.

4. The composite filter cartridge (12) according to any of claims 1 to 3, wherein an annular protrusion (1262) is formed on the connecting casing (126), and a water outlet end of the central water collecting pipe (1221) is fitted in the annular protrusion (1262).

5. The composite filter cartridge (12) according to any one of claims 1 to 4, further comprising:
a first positioning member (127) and a second positioning member (128), wherein the first positioning member and the second positioning member are disposed to two axial ends of the taste filter cartridge and are connected to the taste filter cartridge separately to limit the axial position of the taste filter cartridge (123).

6. The composite filter cartridge (12) according to claim 5, wherein the taste filter cartridge (123) is configured to be a tubular shape, an inner hole of the taste filter cartridge (123) constitutes the pure water channel (a3), the first positioning member (127) comprises a first positioning body (1271) and a first position limiting protrusion (1273) formed on the first positioning body (1271), the first positioning body (1271) covers a first end of the taste filter cartridge (123) adjacent to the central water collecting pipe (1221), the first position limiting protrusion (1273) is fitted in the inner hole of the taste filter cartridge (123), the second positioning member (128) comprises a second positioning body (1281) and a second position limiting protrusion (1283) formed on the second positioning body (1281), the second positioning body (1281) is disposed to a second end of the taste filter cartridge (123) away from the central water collecting pipe (1221), and the second position limiting protrusion (1283) is fitted in the inner hole of the taste filter cartridge (123) and provided with a water drain hole penetrating the second positioning member (128) along the axial direction.

7. A composite filter cartridge assembly (1), comprising:
a filtering housing (11) provided with a raw water inlet (111), a pure water outlet (112) and a concentrated water outlet (113); and
a composite filter cartridge (12) according to any one of claims 1 to 6, wherein the composite filter cartridge (12) is disposed in the filtering housing (11), the raw water inlet (111) is in communication with a water intake end of a pretreatment filter cartridge (121), the pure water outlet (112) is in communication with a pure water channel (a3), and the concentrated water outlet (113) is in communication with a concentrated water channel.

8. A water purification system, comprising:
a composite filter cartridge assembly according to claim 7.

## Patentansprüche

1. Stufenfilterpatrone (12), umfassend:
eine Filtrationsanordnung, umfassend eine Vorbehandlungsfilterpatrone (121) und eine Feinfilterpatrone (122), die der Reihe nach von außen nach innen angeordnet sind, wobei die Feinfilterpatrone (122) ein mittiges Wassersammelrohr (1221) und eine um das mittige Wassersammelrohr (1221) gewickelte Feinfiltrationsmembran (1222) umfasst;
eine erste Endkappe (124), die an einem axialen Ende der Filtrationsanordnung angeordnet und mit der Filtrationsanordnung verbunden ist, um das axiale Ende der Filtrationsanordnung abzudecken;
eine zweite Endkappe (125) mit einer zylindrischen Form, die an dem anderen axialen Ende der Filtrationsanordnung angeordnet und mit der Vorbehandlungsfilterpatrone (121) verbunden ist;
eine Geschmacksfilterpatrone (123), umfassend eine in der zweiten Endkappe (125) angeordnete Aktivkohleschicht, wobei die Geschmacksfilterpatrone (123) mit dem mittigen Wassersammelrohr (1221) verbunden ist und sich stromabwärts der Feinfilterpatrone (122) befindet, wobei ein Konzentratwasserkanal (a1) und ein Umlaufkanal (a2), die der Reihe nach von außen nach innen und voneinander getrennt angeordnet sind, zwischen der Geschmacksfilterpatrone (123) und der zweiten Endkappe (125) definiert sind, wobei der Umlaufkanal (a2) mit dem mittigen Wassersammelrohr (1221) in Verbindung steht und sich stromaufwärts der Geschmacksfilterpatrone (123) befindet und die Geschmacksfilterpatrone (123) mit einem Reinwasserkanal (a3) versehen ist, der zum Reinwasserauslauf konfiguriert ist,
eine Verbindungsdose (126), die in der zweiten Endkappe (125) angeordnet und mit dem mittigen Wassersammelrohr (1221) verbunden ist, wobei der Konzentratwasserkanal (a1) zwischen der Verbindungsdose (126) und der zweiten Endkappe (125) definiert ist, die Geschmacksfilterpatrone (123) in der Verbindungsdose (126) angeordnet ist und der Umlaufkanal (a2) zwischen der Geschmacksfilterpatrone (123) und einer Innenwand der Verbindungsdose (126) definiert ist, wobei ein Teil des Umlaufkanals (a2) der Geschmacksfilterpatrone (123) benachbart verläuft; und
einen vorstehenden Block (1261), der zwischen der Innenwand der Verbindungsdose (126) und der Geschmacksfilterpatrone (123) angeordnet ist, um die Innenwand der Verbindungsdose (126) von der Geschmacksfilterpatrone (123) beabstandet zu machen, wobei ein Spalt zwischen der Innenwand der Verbindungsdose (126) und der Geschmacksfilterpatrone (123) den Umlaufkanal (a2) bildet.

2. Stufenfilterpatrone (12) nach Anspruch 1, wobei die Filtrationsanordnung und die Geschmacksfilterpatrone (123) entlang einer Axialrichtung der Verbundfilterpatrone (12) angeordnet sind.

3. Stufenfilterpatrone (12) nach Anspruch 2, wobei sich in einer Einbaukonfiguration die Geschmacksfilterpatrone (123) über der Filtrationsanordnung befindet.

4. Stufenfilterpatrone (12) nach einem der Ansprüche 1 bis 3, wobei ein ringförmiger Vorsprung (1262) an der Verbindungsdose (126) gebildet ist und ein Wasserauslassende des mittigen Wassersammelrohrs (1221) in den ringförmigen Vorsprung (1262) eingesetzt ist.

5. Stufenfilterpatrone (12) nach einem der Ansprüche 1 bis 4, ferner umfassend:
ein erstes Positionierungselement (127) und ein zweites Positionierungselement (128), wobei das erste Positionierungselement und das zweite Positionierungselement an zwei axialen Enden der Geschmacksfilterpatrone angeordnet sind und getrennt mit der Geschmacksfilterpatrone verbunden sind, um die Axiallage der Geschmacksfilterpatrone (123) zu begrenzen.

6. Stufenfilterpatrone (12) nach Anspruch 5, wobei die Geschmacksfilterpatrone (123) dazu konfiguriert ist, eine Röhrenform aufzuweisen, ein inneres Loch der Geschmacksfilterpatrone (123) den Reinwasserkanal (a3) bildet, das erste Positionierungselement (127) einen ersten Positionierungskörper (1271) und einen an dem ersten Positionierungskörper (1271) ausgebildeten ersten Positionierungsbegrenzungsvorsprung (1273) umfasst, der erste Positionierungskörper (1271) ein erstes Ende der Geschmacksfilterpatrone (123) dem mittigen Wassersammelrohr (1221) benachbart abdeckt, der erste Positionierungsbegrenzungsvorsprung (1273) in das innere Loch der Geschmacksfilterpatrone (123) eingesetzt ist, das zweite Positionierungselement (128) einen zweiten Positionierungskörper (1281) und einen an dem zweiten Positionierungskörper (1281) ausgebildeten zweiten Positionierungsbegrenzungsvorsprung (1283) umfasst, der zweite Positionierungskörper (1281) an einem dem mittigen Wassersammelrohr (1221) abgewandten zweiten Ende der Geschmacksfilterpatrone (123) angeordnet ist, und der zweite Positionsbegrenzungsvorsprung (1283) in das innere Loch der Geschmacksfilterpatrone (123) eingesetzt ist und mit einem Wasserablaufloch versehen ist, das das zweite Positionierungselement (128) entlang der Axialrichtung durchdringt.

7. Stufenfilterpatronenanordnung (1), umfassend:
ein Filtrationsgehäuse (11), das mit einem Rohwassereinlass (111), einem Reinwasserauslass (112) und einem Konzentratwasserauslass (113) versehen ist; und
eine Stufenfilterpatrone (12) nach einem der Ansprüche 1 bis 6, wobei die Stufenfilterpatrone (12) in dem Filtrationsgehäuse (11) angeordnet ist, der Rohwassereinlass (111) mit einem Wassereinlassende einer Vorbehandlungsfilterpatrone (121) in Verbindung steht, der Reinwasserauslass (112) mit einem Reinwasserkanal (a3) in Verbindung steht und der Konzentratwasserauslass (113) mit einem Konzentratwasserkanal in Verbindung steht.

8. Wasserreinigungssystem, umfassend:
eine Stufenfilterpatronenanordnung nach Anspruch 7.

## Revendications

1. Cartouche filtrante composite (12), comportant :
un ensemble de filtration comportant une cartouche filtrante de prétraitement (121) et une cartouche filtrante fine (122) qui sont disposées de manière successive de l'extérieur vers l'intérieur, la cartouche filtrante fine (122) comportant un tuyau de collecte d'eau central (1221) et une membrane de filtration fine (1222) enroulée autour du tuyau de collecte d'eau central (1221) ;
un premier bouchon d'extrémité (124) disposé sur une extrémité axiale de l'ensemble de filtration et raccordé à l'ensemble de filtration pour recouvrir l'extrémité axiale de l'ensemble de filtration ;
un deuxième bouchon d'extrémité (125) ayant une forme cylindrique, disposé sur l'autre extrémité axiale de l'ensemble de filtration et raccordé à la cartouche filtrante de prétraitement (121) ;
une cartouche filtrante pour le goût (123) comportant une couche de charbon actif disposée dans le deuxième bouchon d'extrémité (125), la cartouche filtrante pour le goût (123) étant raccordée au tuyau de collecte d'eau central (1221) et se trouvant en aval par rapport à la cartouche filtrante fine (122), un canal d'eau concentrée (a1) et un canal de circulation (a2) disposés de manière successive de l'extérieur vers l'intérieur et séparés l'un par rapport à l'autre étant définis entre la cartouche filtrante pour le goût (123) et le deuxième bouchon d'extrémité (125), le canal de circulation (a2) étant en communication avec le tuyau de collecte d'eau central (1221) et en amont par rapport à la cartouche filtrante pour le goût (123), et la cartouche filtrante pour le goût (123) comportant un canal d'eau pure (a3) configuré pour l'écoulement en sortie de l'eau pure,
un habillage de raccordement (126) disposé dans le deuxième bouchon d'extrémité (125) et raccordé au tuyau de collecte d'eau central (1221), dans laquelle le canal d'eau concentrée (a1) est défini entre l'habillage de raccordement (126) et le deuxième bouchon d'extrémité (125), la cartouche filtrante pour le goût (123) est disposée dans l'habillage de raccordement (126), et le canal de circulation (a2) est défini entre la cartouche filtrante pour le goût (123) et une paroi intérieure de l'habillage de raccordement (126), dans laquelle une partie du canal de circulation (a2) s'étend de manière adjacente par rapport à la cartouche filtrante pour le goût (123) ; et
un bloc faisant saillie (1261) disposé entre la paroi intérieure de l'habillage de raccordement (126) et la cartouche filtrante pour le goût (123) pour faire en sorte que la paroi intérieure de l'habillage de raccordement (126) est espacée par rapport à la cartouche filtrante pour le goût (123), dans laquelle un espace entre la paroi intérieure de l'habillage de raccordement (126) et la cartouche filtrante pour le goût (123) constitue le canal de circulation (a2).

2. Cartouche filtrante composite (12) selon la revendication 1, dans laquelle l'ensemble de filtration et la cartouche filtrante pour le goût (123) sont agencés le long d'une direction axiale de la cartouche filtrante composite (12).

3. Cartouche filtrante composite (12) selon la revendication 2, dans laquelle, dans une configuration d'installation, la cartouche filtrante pour le goût (123) est située au-dessus de l'ensemble de filtration.

4. Cartouche filtrante composite (12) selon l'une quelconque des revendications 1 à 3, dans laquelle une partie saillante annulaire (1262) est formée sur l'habillage de raccordement (126), et une extrémité de sortie d'eau du tuyau de collecte d'eau central (1221) est adaptée dans la partie saillante annulaire (1262).

5. Cartouche filtrante composite (12) selon l'une quelconque des revendications 1 à 4, comportant par ailleurs :
un premier élément de positionnement (127) et un deuxième élément de positionnement (128), dans laquelle le premier élément de positionnement et le deuxième élément de positionnement sont disposés sur deux extrémités axiales de la cartouche filtrante pour le goût et sont raccordés à la cartouche filtrante pour le goût séparément pour limiter la position axiale de la cartouche filtrante pour le goût (123).

6. Cartouche filtrante composite (12) selon la revendication 5, dans laquelle la cartouche filtrante pour le goût (123) est configurée pour être d'une forme tubulaire, un trou intérieur de la cartouche filtrante pour le goût (123) constitue le canal d'eau pure (a3), le premier élément de positionnement (127) comporte un premier corps de positionnement (1271) et une première partie saillante de limitation de position (1273) formée sur le premier corps de positionnement (1271), le premier corps de positionnement (1271) recouvre une première extrémité de la cartouche filtrante pour le goût (123) de manière adjacente par rapport au tuyau de collecte d'eau central (1221), la première partie saillante de limitation de position (1273) est adaptée dans le trou intérieur de la cartouche filtrante pour le goût (123), le deuxième élément de positionnement (128) comporte un deuxième corps de positionnement (1281) et une deuxième partie saillante de limitation de position (1283) formée sur le deuxième corps de positionnement (1281), le deuxième corps de positionnement (1281) est disposé sur une deuxième extrémité de la cartouche filtrante pour le goût (123) à l'opposé du tuyau de collecte d'eau central (1221), et la deuxième partie saillante de limitation de position (1283) est adaptée dans le trou intérieur de la cartouche filtrante pour le goût (123) et comporte un trou d'évacuation d'eau qui pénètre dans le deuxième élément de positionnement (128) le long de la direction axiale.

7. Ensemble formant cartouche filtrante composite (1), comportant :
un logement de filtration (11) comportant une entrée d'eau brute (111), une sortie d'eau pure (112) et une sortie d'eau concentrée (113) ; et
une cartouche filtrante composite (12) selon l'une quelconque des revendications 1 à 6, la cartouche filtrante composite (12) est disposée dans le logement de filtration (11), l'entrée d'eau brute (111) est en communication avec une extrémité d'admission d'eau d'une cartouche filtrante de prétraitement (121), la sortie d'eau pure (112) est en communication avec un canal d'eau pure (a3), et la sortie d'eau concentrée (113) est en communication avec un canal d'eau concentrée.

8. Système de purification d'eau, comportant :
un ensemble formant cartouche filtrante composite selon la revendication 7.
